# EUROPÄISCHE PATENTSCHRIFT

(11) **EP 1 363 828 B1**
(45) Veröffentlichungstag und Bekanntmachung des Hinweises auf die Patenterteilung: **01.10.2008**
(21) Anmeldenummer: 02724160.3
(22) Anmeldetag: 07.02.2002
(51) Int. Cl.: B62D 25/06, B62D 25/08

(54) **DACHRAHMENANORDNUNG VON KRAFTFAHRZEUGEN**
ROOF FRAME ARRANGEMENT FOR MOTOR VEHICLES
ENSEMBLE BAIE POUR VEHICULES AUTOMOBILES

(30) Priorität: 02.03.2001 DE 10110057
(43) Veröffentlichungstag der Anmeldung: 26.11.2003
(73) Patentinhaber: Daimler AG, 70327 Stuttgart (DE)
(72) Erfinder: EIPPER, Konrad, 72108 Rottenburg (DE); KOSLOWSKI, Heinz, 70839 Gerlingen (DE); LOHSE, Thomas, 21358 Mechtersen (DE); SAILER, Thomas, 72555 Metzingen (DE); SCHRÖDER, Matthias, 21720 Grünendeich (DE); WENDLER, Roland, 71034 Böblingen (DE)
(86) Internationale Anmeldenummer: PCT/EP2002/001266
(87) Internationale Veröffentlichungsnummer: WO 2002/070324

(56) Entgegenhaltungen:
- EP-A- 1 070 818
- DE-A- 10 014 367
- DE-A- 10 034 141

## Beschreibung

Die Erfindung betrifft eine Dachrahmenanordnung von Kraftfahrzeugen. Eine gattungsgemäße Dachrahmenanordung ist aus der EP 1 070 818 A bekannt.

Bei herkömmlichen Kraftfahrzeugen, insbesondere bei sogenannten Kombinationsfahrzeugen, besteht der Dachrahmen aus einer Vielzahl von einzelnen Blechpreßteilen, die zu einer Innenschale und einer Außenschale gefügt sind, welche ihrerseits unter Bildung eines Hohlraumes zu einem Hohlprofil gefügt, insbesondere verschweißt sind. Die Stützvorrichtung für die nach oben schwenkbare Heckklappe wird von Scharnieren gebildet, die einenends am hinteren Dachrahmen befestigt sind. Zusätzlich wird die Heckklappe noch durch Gasfedern abgestützt, die einerseits am Heckpfosten der Karosserie und andererseits an der Heckklappe unmittelbar angelenkt sind. Diese Schalen müssen, um die Dichtigkeit der Karosserie besonders im Endbereich des nach hinten im Rohbauzustand offenen seitlichen Dachrahmens zu gewährleisten, in aufwendiger und sorgfältiger Weise in den Flanschbereichen nach außen abgedichtet werden, was häufig umweltunverträgliche Dichtstoffe erfordert. Des weiteren ergibt sich ein Nachteil durch die notwendigen Schweißflansche hinsichtlich des aufzubringenden Bauraumes, wobei größere Bauräume benötigt werden ohne den hergestellt Hohlprofilquerschnitt substantiell zu vergrößern. Weiterhin entstehen aufgrund der Mehrteiligkeit und der verzugbehafteten Schweißverbindungen Toleranzprobleme, die auch hinsichtlich des Anschlusses an den hinteren Dachrahmen die Abdichtungsmöglichkeit der Anordnung behindern und ein aufwendiges Richten der Dachrahmenanordnung zur Folge haben.

Des weiteren ist eine Dachrahmenanordnung aus der DE-PS 27 44 927 bekannt, bei der nicht näher auf den Aufbau des gesamten Dachrahmens eingegangen ist, welche jedoch am Heckabschluß in den oberen Ecken der Klappenöffnung einen Hohlraum aufweist, der von dem Blech des Heckpfostens, von dem Blech des Dachrrahmens und von dem Dach selbst gebildet wird. In diesem Hohlraum ist die Stützvorrichtung für eine Heckklappe eines Kraftfahrzeuges aufgenommen, wobei die vertikal schwenkbar befestigte Gasdruckfeder mit dem Heckklappenscharnier gelenkig verbunden ist.

Der Erfindung liegt die Aufgabe zugrunde, eine Dachrahmenanordnung mit erhöhter Steifigkeit aufzuzeigen, die in einfacher Weise bauraumsparend und mit möglichst wenig Fertigungstoleranzen hergestellt werden kann und bei der kein größerer Dichtigkeitsaufwand vonnöten ist.

Die Aufgabe ist erfindungsgemäß durch die Merkmale des Patentanspruches 1 gelöst.

Aufgrund dessen, daß der hintere Endbereich des seitlichen Dachrahmens, der im Rohbauzustand nach hinten offen ist, ein einstückiges umfänglich geschlossenes Hohlprofil aufweist, wird die Steifigkeit des Rahmens gegenüber der Schalenbauweise in einfacher Weise besonders erhöht, was besonders bei einem Seitenaufprall und Überschlägen des Kraftfahrzeuges durch die ernergieabsorbierende Wirkung von erheblichem Vorteil ist. Schweißflansche sind für die Herstellung nicht mehr zwangsläufig notwendig und für die Betrachtung der Dichtigkeit von keiner Bedeutung mehr. Das erfindungsgemäße Hohlprofil läßt durch das Fehlen von Spalten und Schweißflanschen keine Dichtigkeitsprobleme aufkommen, wobei die Fertigung mit wesentlich geringeren Toleranzen erfolgen kann als bei einem mehrteiligen Schalenbau. Durch seine infolge seiner Rohrform sehr hohen Steifigkeit kann bei unerheblicher Verringerung der Steifigkeit die Wandstärke reduziert werden, was Bauraum und Gewicht einspart. In vorteilhafter Weise hinsichtlich einer bauraumsparenden und geschützten Unterbringungsmöglichkeit bildet das Hohlprofil ein Aufnahmegehäuse, in dem das Scharnier und/oder die Gasdruckfeder angebracht ist. Das Hohlprofil kann als Rohling beispielsweise ein Strangpreßprofil, oder ein gezogenes Rohr sein oder aus einer Platine geschnitten und nach einer anschließenden Biege- oder Rolloperation längsnahtgeschweißt sein.

In einer vorteilhaften Weiterbildung nach Anspruch 2 ist das Hohlprofil im Hohlraum des Dachrahmens aufgenommen. Die Schalenbauweise zieht sich dann zwangsläufig über die gesamte Länge des seitlichen Dachrahmens, wodurch jedoch der Endbereich in Verbindung mit dem aufgenommenen Hohlprofil eine Blechverdopplung aufweist, die eine besondere Stabilität und Steifigkeit des Rahmens erbringt. Das Hohlprofil kann entweder in den Schweißzusammenbau der Schalen von hinten mit geringem Spiel eingeschoben und dann mit diesem in geeigneter Weise mechanisch, durch Kleben oder Schweißen verbunden werden oder von den Schalen des hinteren Endbereiches des seitlichen Dachrahmens unter Erreichung einer Klemmwirkung eng ummantelt, welche anschließend miteinander verschweißt werden.

Weitere zweckmäßige Ausgestaltungen der Erfindung können den Unteransprüchen entnommen werden; im übrigen ist die Erfindung anhand mehrerer in den Zeichnungen dargestellter Ausführungsbeispiele nachfolgend näher erläutert; dabei zeigt:
Fig. 1 in einer perspektivischen Zeichnung einen Teil der erfindungsgemäßen Dachrahmenanordnung mit einem seitlichen und einem hinteren Dachrahmen und einem die Seitentüren und Seitenfenster unmittelbar umgebenden Teil einer Kraftfahrzeugseitenwand,
Fig. 2 in einer perspektivischen Schnittdarstellung das Hohlprofil einer erfindungsgemäßen Rahmenanordnung gemäß Fig. 1 mit im Hohlprofil befestigten Scharnier und Gasfeder,
Fig. 3 in einer perspektivischen Schnittdarstellung das Hohlprofil der Rahmenanordnung aus Fig. 1 ohne Gasfeder und Scharnier im Zusammenbau mit einem Hohlprofil des hinteren Dachrahmens,
Fig. 4 in einer perspektivischen Schnittdarstellung das Hohlprofil der Rahmenanordnung aus Fig. 1 mit Gasfeder im Zusammenbau mit einem das Scharnier beinhaltenden Hohlprofil des hinteren Dachrahmens,
Fig. 5 in einer perspektivischen Darstellung ein erfindungsgemäßes Hohlprofil des seitlichen Dachrahmens der Rahmenanordnung in Knieform mit befestigtem Heckklappenscharnier ohne Gasfeder,
Fig. 6 in einer Hinteransicht das Hohlprofil aus Fig. 5.

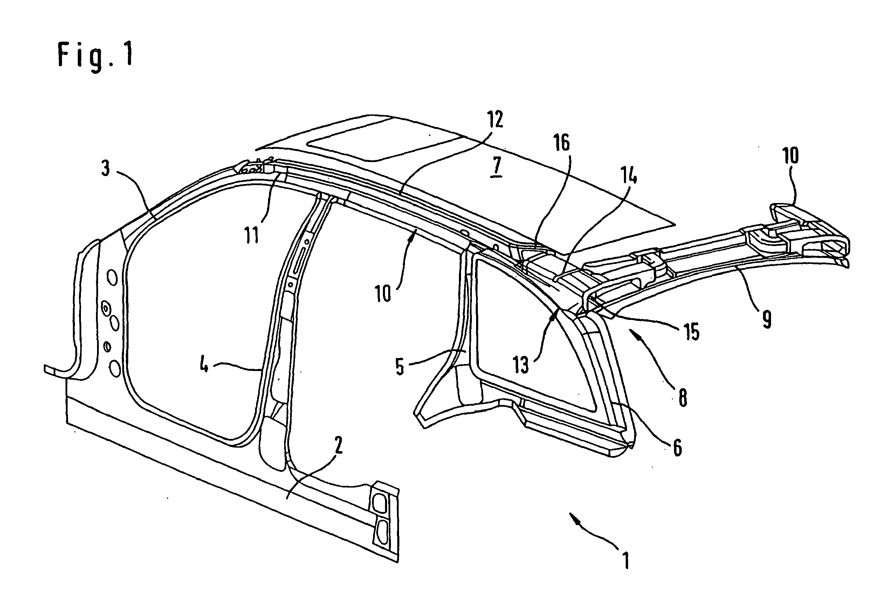

In Fig. 1 ist ein Teil einer Rohbaukarosserie 1 eines Kraftfahrzeuges dargestellt, welche aus einer Seitenwand 2 mit einer A-Säule 3, einer B-Säule 4, einer C-Säule 5 und einer D-Säule 6, sowie aus einem Dach 7 und einer Dachrahmenanordnung 8 besteht. Die Dachrahmenanordnung 8 beinhaltet einen vorderen (hier nicht gezeigt) und einen hinteren Dachrahmen 9, sowie zwei seitliche Dachrahmen 10 (von denen der rechte in der Darstellung nur ansatzweise zu sehen ist). Der seitliche Dachrahmen 10 wird gebildet von einer Außenschale 11, die ihrerseits zumindest teilweise von den oberen Abschlußbereichen der Säulen 3-6 und von den Verbindungsstegen der Abschlußbereiche gebildet wird, und einer Innenschale 12, welche mit der Außenschale 11 und dem Dach 7 durch Verschweißen verbunden einen den Rahmen 10 versteifenden Hohlraum einschließt.

An die so gebildete Schalenstruktur des seitlichen Dachrahmens 10 schließt sich zum Fahrzeugheck hin als hinterer Endbereich 13 ein umfänglich geschlossenes Hohlprofil 14 an, welches mit seinem Innenraum 15 den Hohlraum des seitlichen Dachrahmens 10 weiterführt. Das Hohlprofil 14 liegt an der Außenschale 11 einerseits an und ist andererseits an seinem vorderen Ende von einem zum Fahrzeugheck hin abragenden Klemmschenkel 16 der Innenschale 12 eingefaßt. Hierdurch wird eine besonders gute Krafteinleitung bei einem Seitenaufprall in die restliche Struktur des Rohbaus erreicht. In dieser Einfassung kann das Hohlprofil 14 im übrigen mit der Außenschale 11 und dem Klemmschenkel 16 verschweißt oder verklebt sein. Bei der Verwendung eines derartigen Hohlprofiles 14 anstelle einer Schalenstruktur entfallen in einfacher Weise jegliche Schweißflansche, so daß der seitliche Dachrahmen 10 dort einen kleineren Bauraum einnimmt oder bei Nutzung des Bauraumes der Querschnitt des Rahmens 10 entsprechend dem von den Schweißflanschen in Anspruch genommenen Bauraum vergrößert werden kann mit aufgrund des größeren hohlen Querschnittes erheblich höherer Steifigkeit. Hierbei ist zudem hervorzuheben, daß das Gewicht des Dachrahmens reduziert wird, da die Schweißflansche wegfallen. Darüber hinaus fallen bei der Herstellung des hinteren Endbereiches 13 des seitlichen Dachrahmens 10 die aufwendigen Schweißoperationen der Schalenbauweise weg. Im übrigen wird die Teilevielfalt des Zusammenbaus der Dachrahmenanordnung vorteilhaft verringert, da die Schalen des Endbereiches 13 durch ein einziges Teil - das Hohlprofil 14 - ersetzt werden.

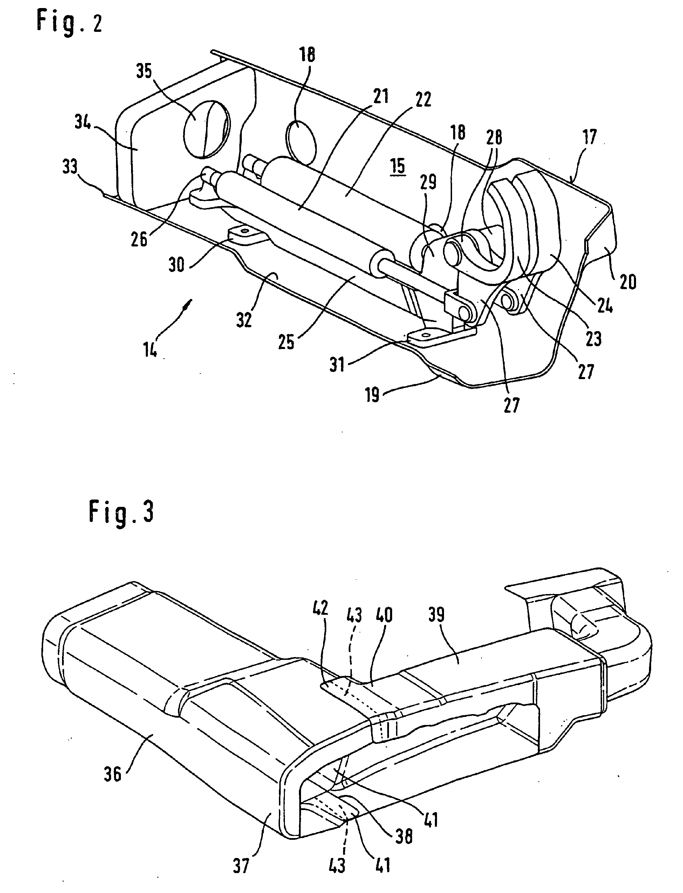

An das Hohlprofil 14 ist endseitig der hintere Dachrahmen 9 angebunden, welcher in Schalenbauweise ausgebildet ist. Das Hohlprofil 14 wird aus einem rohrförmigen Rohling gefertigt, wobei der Rohling ausgehend von einem kreisrunden Querschnitt in einen etwa rechteckigen Querschnitt gequetscht und nach der Quetschung in ein Innenhochdruck-Umformwerkzeug eingelegt wird. In diesem Werkzeug, in dem im übrigen in verfahrensökonomischer Weise auch durch den Schließvorgang die Quetschung vorgenommen werden kann, ein fluidischer Innenhochdruck im Innenraum 15 erzeugt, durch welchen sich das Hohlprofil 14 aufweitet und sich an die Werkzeuggravur konturgetreu anlegt. Aufgrund der praktisch fehlenden Rückspringcharakteristik von Tiefziehteilen und der formexakten Ausbildung des Innenhochdruckumformteils wird prozeßsicher und stets reproduzierbar eine quasi toleranzfreie Gestaltung des hinteren Endbereichs 13 des seitlichen Dachrahmens 10 erzielt, wodurch die oben angesprochenen Dichtungsprobleme besonders gut behoben sind. In vorteilhafter Weise können während des Innenhochdruckumformprozesses aus dem Hohlprofil 14 zusätzlich Befestigungsflächen 17 nahzu beliebiger Form zur Anbindung an den hinteren Dachrahmen 9 und an die sich an das Hohlprofil 14 anschließende Schalenstruktur des seitlichen Dachrahmens 10, wie in Fig. 2 zu sehen, relativ einfach wie gewünscht ausgeformt werden. Des weiteren können im Anschluß an den Umformvorgang noch im Werkzeug bei bestehendem Innenhochdruck durch in das Werkzeug integrierte Stanzstempel Befestigungs- und/oder Montagelöcher 18 in einfacher Weise rationell erzeugt werden.

In einer Variante des Hohlprofiles 14 nach Fig. 2, weist dieses an seinem hinteren Ende 19 eine dem hinteren Dachrahmen 9 zugewandte durch die Innenhochdruckumformung gebildete Ausstülpung 20 am Umfang auf, die eine im wesentlichen ebene Befestigungsfläche 17 für die Befestigung von Profilen des hinteren Dachrahmens 9 trägt. Im Innenraum 15 des eine Federaufnahme bildenden Hohlprofils 14 sind Gasdruckfedern 21 und 22, ein Heckscheibenscharnier 23, das mit einer von der Heckklappe des Kraftfahrzeuges unabhängig schwenk- oder klappbaren Heckscheibe verbunden ist, und ein Heckklappenscharnier 24 angeordnet. Die Gasdruckfedern 21 und 22 und die Scharniere 23 und 24 bilden eine kompakte bauraumsparende und leicht zu montierende Baueinheit, wobei die einzelnen Baukomponenten auf einem Lagerbock 25 gehalten sind. Die Gasdruckfedern 21 und 22 sind mit ihrem scharnierabgewandten Ende 26 lediglich vertikal schwenkbar am Lagerbock 25 befestigt und sind an einem nach unten weisenden Scharnierhebel 27 angelenkt. Die klauenförmigen Scharniere 23 und 24 sind mit einer unteren Scharnierklaue 28 an einem nach oben abragenden Lagerblock 29 seitlich angebracht und dort schwenkgelagert. Der Lagerblock 29 ist einstückig mit dem Lagerbock 25 verbunden, welcher sich leistenartig erstreckt und mit einem vorderen und einem hinteren Fuß 30,31 am Boden 32 des Hohlprofiles 14 beispielsweise durch Schweißen oder Kleben oder - mechanisch - durch Befestigungselemente, insbesondere Schrauben fixiert ist. Diese vormontierte Baueinheit läßt sich leicht in das Hohlprofil 14 einführen und an einer gewünschten Axialposition platzieren. Die Befestigung bzw. die Montage erfolgt mitunter über die erwähnten Montagelöcher 18, die am Umfang des Hohlprofils 14 ausgebildet sind. In das Hohlprofil 14 ist am vorderen Ende 33 ein Abdichtblech 34 eingeschweißt und geklebt, um ein Eindringen von Feuchtigkeit im Anschlußbereich an die Schalenstruktur des seitlichen Dachrahmens 10 zu verhindern. Das Abdichtblech 34 weist eine Öffnung 35 auf, die von hier nicht dargestellten Versorgungskabelsträngen und/oder Schläuchen durchragt wird und die ebenfalls wie die Montageöffnung 18 abschließend mit einer Gummidichtung verschlossen wird.

Es ist im übrigen denkbar, daß anstatt eines gemeinsamen Lagerbockes 25 jeder Gasdruckfeder 21 und 22 ein separater Lagerbock zugeordnet ist. Des weiteren müssen die Gasdruckfedern 21 und 22 nicht zwangsweise an den Scharnieren 23 und 24 angelenkt sondern direkt an der Heckklappe respektive Heckscheibe beweglich angebracht sein.

Eine Variante zum zuletzt beschriebenen Hohlprofil 14 zeigt Fig. 3. Das dortige Hohlprofil 36 weist an seinem fahrzeughecknahen hinteren Ende 37 auf Seiten des hinteren Dachrahmens 9 in verbindungstechnisch günstiger Weise eine Ausklinkung 38 auf, in die ein vorzugsweise ebenfalls durch Innenhochdruckumformen erzeugtes Hohlprofil 39 des hinteren Dachrahmens 9 mit seinem zugewandten Ende 40 eingreift, wobei die Ränder 41 der Ausklinkung 38 von dem Hohlprofil 39 umgriffen werden. Das Hohlprofil 39 ist dazu endseitig aufgestülpt, so daß sich ein schweißflanschartiger Bereich 42 über den gesamten Umfang des Hohlprofilendes ausbildet, welcher beim Umgreifen der Ausklinkungsränder 41 eine Überlappungszone 43 schafft, in der die beiden Hohlprofile 36 und 39 in leicht zu handhabender Weise verschweißt, vorzugsweise punktgeschweißt werden können. Zur sicheren Abdichtung werden die Hohlprofile 36 und 39 dort noch verklebt, wobei der Klebevorgang nach dem Schweißen erfolgt. Der Klebstoff wird auf das Hohlprofil 36 unmittelbar neben dem Ende des umgreifenden und bereits verschweißten Hohlprofiles 39 aufgetragen, wonach der noch flüssige Klebstoff durch einen Kapillareneffekt des Fügespaltes zwischen den Hohlprofilen 36 und 39 in die Überlappungszone 43 breitflächig hineingezogen wird und dann aushärten kann. Die Schwächung des Hohlprofiles 36 durch die Ausklinkung 38 hinsichtlich der Steifigkeit an dieser Stelle wird durch die geschilderte rechtwinklige Anbindung an das Hohlprofil 39 des hinteren Dachrahmens 9 mehr als kompensiert. Außerdem werden von außen einwirkende Kräfte wie beim Seitenaufprall durch die großflächige Einleitung in den hinteren Dachrahmen 9 sehr gut auf den übrigen Dachrahmen übertragen, so daß eine hohe Stoßfestigkeit erreicht wird.

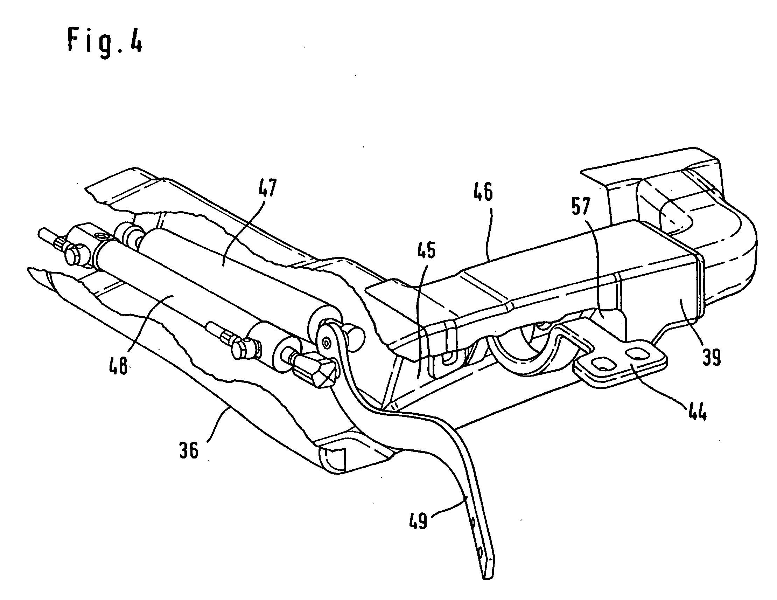

In Fig. 4 ist das Hohlprofil 39 nach hinten zumindest teilweise offen und zeigt hierbei einen horizontal verlaufenden Schlitz 57. Durch den Schlitz 57 hindurch erstreckt sich nach außen ein Heckklappenscharnier 44, das im Hohlprofil 39 an der Innenseite 45 der hinteren Profilstirnseite 46 schraubbefestigt ist. Im Hohlprofil 36 ist separat zum Scharnier wirkend allein eine Gasdruckfeder 47 und ein motorisch angetriebener Hydraulikzylinder 48 - auf hier nicht weiter dargestellten Lagerböcken gelagert - angeordnet, welche einerseits selbsttätig und andererseits gesteuert zur Abstützung der Heckklappe über einen Hebelarm 49 dienen. Hierbei kann der Hydraulikzylinder 48 auch gänzlich die Gasdruckfeder 47 ersetzen. Durch die Separierung von Gasdruckfeder und Scharnier kann die Dachrahmenanordnung, insbesondere der seitliche Dachrahmen schmaler gebaut werden. Über den Hydraulikzylinder 48 kann nach Entriegelung der Heckklappe von der Fahrgastzelle aus die Heckklappe gesteuert aufgeschwenkt werden ohne die Verletzungsgefahr bei einem abrupten Auffedern der Klappe zu entfalten.

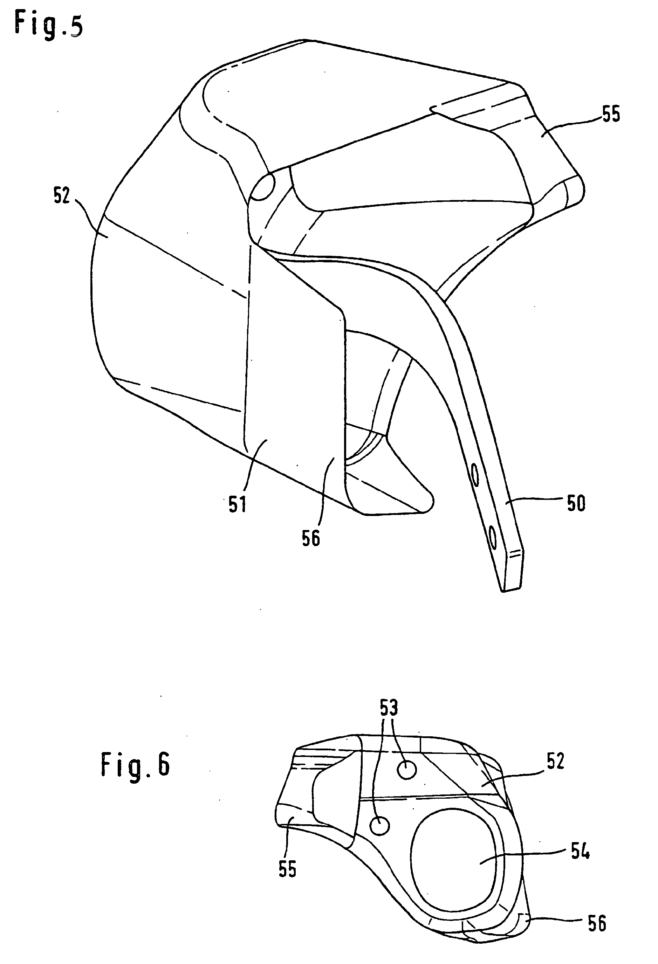

In einer weiteren kurzbauenden Variante nach Figur 5 bzw. 6 ist das Heckklappenscharnier 50 im Hohlprofil 51 einenends angebracht. Das Scharnier 50 ist seinerseits an eine Gasdruckfeder gekoppelt, welche in der Schalenstruktur des sich an das Hohlprofil 51 anschließenden seitlichen Dachrahmens 10 angeordnet ist. Das Hohlprofil 51 ist in Form eines Knies gebogen, dann in eine polygonale Querschnittsstruktur vorzugsweise innerhalb eines Innenhochdruck-Umformwerkzeuges gequetscht und schließlich zur Beseitigung der dabei entstehenden Einfallstellen und zur Erzielung der gewünschten toleranzfreien Außenkontur durch einen fluidischen Innenhochdruck gravurgemäß aufgeweitet. Es kann, um die Umformgrade zu erreichen, möglich sein, daß die Aufweitung in mehreren Schritten unterbrochen durch Zwischenglühen erfolgt. Im Kniebereich 52 werden mehrere Öffnungen 53 und 54 herausgeschnitten, von denen zwei 53 (Fig. 6) zur Befestigung des Scharnieres 50 dienen. Über die Öffnung 54 wird das Scharnier 50 mit einer diese durchragenden Kolbenstange der Gasdruckfeder verbunden, wonach die Öffnung 54 durch eine Gummikappe abgedichtet wird. Während das eine Ende 55 des Hohlprofiles 51 in einfacher Weise durch seine natürliche Rohröffnung eine exakte Anbindung an den hinteren Dachrahmen 9 gewährleistet, erhält das Ende 56 abschließend einen Raumbeschnitt mittels eines Lasers, um die Toleranzanforderungen an die zu befestigende Dichtung zu befriedigen.

## Patentansprüche

1. Dachrahmenanordnung (8) von Kraftfahrzeugen, mit einem vorderen, einem hinteren (9) und zwei seitlichen Dachrahmen (10) und mit einer Stützvorrichtung für eine Kraftfahrzeugheckklappe, welche ein Heckklappenscharnier (24,44) und zumindest eine Gasdruckfeder (21,22,47) umfaßt, wobei zumindest der seitliche Dachrahmen (10) eine Innenschale (12) und einer mit dieser verbundenen Außenschale (11) beinhaltet und wobei zwischen Innenschale (12) und Außenschale (11) ein Hohlraum ausgebildet ist, **dadurch gekennzeichnet, daß** ein hinterer Endbereich (13) des seitlichen Dachrahmens (10) ein einstückiges umfänglich geschlossenes Hohlprofil (14,36,51) aufweist, welches dort den Hohlraum einschließt und ein Aufnahmegehäuse bildet, in dem das Scharnier (24,44,50) und/oder die Gasdruckfeder (21,22,47) angebracht ist.

2. Dachrahmenanordnung nach Anspruch 1,
**dadurch gekennzeichnet,**
**daß** das Hohlprofil (14,36,51) im Hohlraum des seitlichen Dachrahmens (10) aufgenommen ist.

3. Dachrahmenanordnung nach Anspruch 1,
**dadurch gekennzeichnet,**
**daß** das Hohlprofil (14,36,51) sich an die Schalenstruktur des seitlichen Dachrahmens (10) als hinterer Endbereich (13) anschließt, wobei der Hohlraum des hinteren Endbereiches (13) des seitlichen Dachrahmens (10) vom Innenraum (15) des Hohlprofiles (14,36,51) gebildet ist.

4. Dachrahmenanordnung nach Anspruch 3,
**dadurch gekennzeichnet,**
**daß** das Hohlprofil (14,36,51) von einem zum Fahrzeugheck hin abragenden Klemmschenkel (16) der Innenschale (12) und der Außenschale (11) eingefaßt ist.

5. Dachrahmenanordnung nach einem der Ansprüche 1 bis 4,
**dadurch gekennzeichnet,**
**daß** das Hohlprofil (14,36,51) ein Innenhochdruckumformteil ist.

6. Dachrahmenanordnung nach einem der Ansprüche 1 bis 5,
**dadurch gekennzeichnet,**
**daß** das Heckklappenscharnier (24,44,50) im Hohlprofil (14,36,51) einenends angebracht ist und an die Gasdruckfeder (22,47) gekoppelt ist, welche in der Schalenstruktur des sich an das Hohlprofil (14,36,51) anschließenden seitlichen Dachrahmens (10) angeordnet ist.

7. Dachrahmenanordnung nach Anspruch 6,
**dadurch gekennzeichnet,**
**daß** das Hohlprofil (51) in Form eines Knies gebogen ist, wobei im Kniebereich (52) eine Öffnung (54) ausgebildet ist, über die die Gasdruckfeder (22,47) mittels einer die Öffnung (54) durchragenden Kolbenstange mit dem Scharnier (24,44,50) verbunden ist.

8. Dachrahmenanordnung nach einem der Ansprüche 1 bis 5,
**dadurch gekennzeichnet,**
**daß** sowohl die Gasdruckfeder (21,22,47) als auch das Heckklappenscharnier (24,44,50) innerhalb des Hohlprofiles (14,36,51) angeordnet ist, wobei die Gasdruckfeder (21,22,47) an einem Scharnierende (27) angelenkt ist.

9. Dachrahmenanordnung nach 8,
**dadurch gekennzeichnet,**
**daß** die Gasdruckfeder (21,22,47) und das Scharnier (24,44,50) eine Baueinheit bilden, die auf einem Lagerbock (25) gehalten sind, wobei die Gasdruckfeder (21,22,47) mit ihrem scharnierabgewandten Ende (26) lediglich vertikal schwenkbar am Lagerbock (25) befestigt ist und wobei das Scharnier (24,44,50) am Lagerbock (25) einenends schwenkgelagert ist, und daß der Lagerbock (25) am seitlichen Dachrahmen (10) fixiert ist.

10. Dachrahmenanordnung nach einem der Ansprüche 1 bis 9,
**dadurch gekennzeichnet,**
**daß** im Hohlprofil (14,36,51) des seitlichen Dachrahmens (10) zusätzlich eine weitere Gasdruckfeder (21) angeordnet ist, die eine in der Heckklappe des Kraftfahrzeuges schwenk- oder klappbar gelagerte Heckscheibe abstützt.

11. Dachrahmenanordnung nach Anspruch 10,
**dadurch gekennzeichnet,**
**daß** die weitere Gasdruckfeder (21) an einem hinsichtlich des Heckklappenscharnieres (24) separaten Heckscheibenscharnier (23) angelenkt ist.

12. Dachrahmenanordnung nach einem der Ansprüche 1 bis 5,
**dadurch gekennzeichnet,**
**daß** an das Hohlprofil (14,36,51) des seitlichen Dachrahmens (10) ein Hohlprofil (39) des hinteren Dachrahmens (9) angeschlossen ist, welches nach hinten zumindest teilweise offen ist und in welchem das Heckklappenscharnier (44) angeordnet ist, und daß die Gasdruckfeder (47) separat zum Scharnier (44) wirkend im Hohlprofil (14,36,51) angeordnet ist.

13. Dachrahmenanordnung nach einem der Ansprüche 1 bis 12,
**dadurch gekennzeichnet,**
**daß** die Stützvorrichtung anstelle der Gasdruckfeder (22,47) einen motorisch angetriebenen Hydraulikzylinder (48) beinhaltet.

14. Dachrahmenanordnung nach einem der Ansprüche 1 bis 13,
**dadurch gekennzeichnet,**
**daß** das Hohlprofil (14) an seinem hinteren Ende (19) eine zum hinteren Dachrahmen (9) weisende Ausstülpung (20) mit im wesentlichen ebener Befestigungsfläche (17) zur Befestigung an dem hinteren Dachrahmen (9) aufweist.

15. Dachrahmenanordnung nach einem der Ansprüche 1 bis 13,
**dadurch gekennzeichnet,**
**daß** das umfänglich geschlossene Hohlprofil (36) des seitlichen Dachrahmens (10) an seinem hinteren Ende (37) eine Ausklinkung (38) aufweist, in die ein Hohlprofil (39) des hinteren Dachrahmens (9) eingreift, wobei die Ränder (41) der Ausklinkung (38) von dem Hohlprofil (39) umgriffen und dort mit diesem verschweißt sind.

## Claims

1. Roof frame arrangement (8) for motor vehicles having one front, one rear (9) and two lateral roof frames (10) and having a supporting device for a motor vehicle tailgate which comprises a tailgate hinge (24, 44) and at least one gas spring (21, 22, 47), at least the lateral roof frame (10) comprising an inner shell (12) and an outer shell (11) connected to said inner shell (12), and a hollow space being formed between the inner shell (12) and the outer shell (11),
**characterised in that**
a rear end area (13) of the lateral roof frame (10) has a peripherally closed, one-piece hollow section (14, 36, 51) which encompasses the hollow space at this point and forms a receiving housing in which the hinge (24, 44, 50) and/or the gas spring (21, 22, 47) are mounted.

2. Roof frame arrangement in accordance with claim 1,
**characterised in that**
the hollow section (14, 36, 51) is received in the hollow space in the lateral roof frame (10).

3. Roof frame arrangement in accordance with claim 1,
**characterised in that**
the hollow section (14, 36, 51) adjoins the shell structure of the lateral roof frame (10) as its rear end area (13), the hollow space in the rear end area (13) of the lateral roof frame (10) being formed by the interior (15) of the hollow section (14, 36, 51).

4. Roof frame arrangement in accordance with claim 3,
**characterised in that**
the hollow section (14, 36, 51) is framed by a clamping limb (16) on the inner shell (12) and the outer shell (11) which projects towards the rear of the vehicle.

5. Roof frame arrangement in accordance with one of claims 1 to 4,
**characterised in that**
the hollow section (14, 36, 51) is internal high-pressure formed part.

6. Roof frame arrangement in accordance with one of claims 1 to 5,
**characterised in that**
the tailgate hinge (24, 44, 50) is mounted in the hollow section (14, 36, 51) one end and coupled to the gas spring (22, 47) which is positioned in the shell structure of the lateral roof frame (10) adjoining the hollow section (14, 36, 51).

7. Roof frame arrangement in accordance with claim 6,
**characterised in that**
the hollow section (51) is bent in the manner of a knee, there being formed in the knee area (52) an opening (54) via which the gas spring (22, 47) is connected to the hinge (24, 44 50) by means of a piston rod which projects through the opening (54).

8. Roof frame arrangement in accordance with one of claims 1 to 5,
**characterised in that**
both the gas spring (21, 22, 47) and the tailgate hinge (24, 44, 50) are positioned inside the hollow section (14, 36, 51), the gas spring (21, 22, 47) being coupled to one end (27) of the hinge.

9. Roof frame arrangement in accordance with claim 8,
**characterised in that**
the gas spring (21, 22, 47) and the hinge (24, 44, 50) form a module which is held on a bearing bracket (25), the end (26) of the gas spring (21, 22, 47) facing away from the hinge being fixed to the bearing bracket (25) such that it can only be pivoted vertically and one end of the hinge (24, 44, 50) being mounted on the bearing bracket (25) such that it is able to pivot, and the bearing bracket (25) is fixed to the lateral roof frame (10).

10. Roof frame arrangement in accordance with one of claims 1 to 9,
**characterised in that**
in addition a further gas spring (21) is positioned in the hollow section (14, 36, 51) of the lateral roof frame (10) to support a rear window mounted in the tailgate of the motor vehicle such that it is able to pivot or tilt.

11. Roof frame arrangement in accordance with claim 10,
**characterised in that**
the further gas spring (21) is coupled to a rear window hinge (23) which is separate from the tailgate hinge (24).

12. Roof frame arrangement in accordance with one of claims 1 to 5,
**characterised in that**
connected to the hollow section (14, 36, 51) of the lateral roof frame (10) is a hollow section (39) of the rear roof frame (9) which is at least partially open to the rear and in which the tailgate hinge (44) is positioned, and the gas spring (47) is positioned in the hollow section (14, 36, 51) and acts separately from the hinge (44).

13. Roof frame arrangement in accordance with one of claims 1 to 12,
**characterised in that**
instead of the gas spring (22, 47) the supporting device contains a motor-driven hydraulic cylinder (48).

14. Roof frame arrangement in accordance with one of claims 1 to 13,
**characterised in that**
the rear end (19) of the hollow section (14) has a protuberance (20) pointing towards the rear roof frame (9) with an essentially flat fixing surface (17) for fixing it to the rear roof frame (9).

15. Roof frame arrangement in accordance with one of claims 1 to 13,
**characterised in that**
at its rear end (37) the peripherally closed hollow section (36) of the lateral roof frame (10) has a notch (38) in which engages a hollow section (39) of the rear roof frame (9), the edges (41) of the notch (38) being surrounded by the hollow section (39) and welded to it at this point.

## Revendications

1. Ensemble cadre de toit (8) de véhicules automobiles, avec un cadre de toit avant, un cadre de toit arrière (9) et deux cadres de toit latéraux (10) et avec un dispositif d'appui pour un hayon de véhicule automobile, qui comprend une charnière de hayon (24, 44) et au moins un ressort à gaz (21, 22, 47), au moins le cadre de toit latéral (10) comportant une coque intérieure (12) et une coque extérieure (11) reliée à celle-ci et une cavité étant réalisée entre la coque intérieure (12) et la coque extérieure (11), **caractérisé en ce qu'**une extrémité arrière (13) du cadre de toit latéral (10) présente un profilé creux (14, 36, 51) d'un seul tenant fermé sur sa périphérie, qui y enferme la cavité et forme un boîtier de réception, dans lequel est monté la charnière (24, 44, 50) et/ou le ressort à gaz (21, 22, 47).

2. Ensemble cadre de toit selon la revendication 1, **caractérisé en ce que** le profilé creux (14, 36, 51) est reçu dans la cavité du cadre de toit latéral (10).

3. Ensemble cadre de toit selon la revendication 1, **caractérisé en ce que** le profilé creux (14, 36, 51) se raccorde à la structure en coque du cadre de toit latéral (10) sous forme d'extrémité arrière (13), la cavité de l'extrémité arrière (13) du cadre de toit latéral (10) étant formée par l'espace intérieur (15) du profilé creux (14, 36, 51).

4. Ensemble cadre de toit selon la revendication 3, **caractérisé en ce que** le profilé creux (14, 36, 51) est bordé par une aile de serrage (16), faisant saillie vers le hayon de véhicule, de la coque intérieure (12) et de la coque extérieure (11).

5. Ensemble cadre de toit selon l'une quelconque des revendications 1 à 4, **caractérisé en ce que** le profilé creux (14, 36, 51) est un élément façonné par haute pression intérieure.

6. Ensemble cadre de toit selon l'une quelconque des revendications 1 à 5, **caractérisé en ce que** la charnière de hayon (24, 44, 50) est montée d'un côté dans le profilé creux (14, 36, 51) et est couplée au ressort à gaz (22, 47), qui est disposé dans la structure en coque du cadre de toit latéral (10) se raccordant au profilé creux (14, 36, 51).

7. Ensemble cadre de toit selon la revendication 6, **caractérisé en ce que** le profilé creux (51) est plié en forme de coude, une ouverture (54) étant réalisée dans la zone du coude (52) par le biais de laquelle le ressort à gaz (22, 47) est relié à la charnière (24, 44, 50) au moyen d'une tige de piston traversant l'ouverture (54).

8. Ensemble cadre de toit selon l'une quelconque des revendications 1 à 5, **caractérisé en ce que** aussi bien le ressort à gaz (21, 22, 47) que la charnière de hayon (24, 44, 50) sont agencés à l'intérieur du profilé creux (14, 36, 51), le ressort à gaz (21, 22, 47) étant articulé à une extrémité de charnière (27).

9. Ensemble cadre de toit selon la revendication 8, **caractérisé en ce que** le ressort à gaz (21, 22, 47) et la charnière (24, 44, 50) forment une unité de construction, qui sont maintenus sur un support de palier (25), le ressort à gaz (21, 22, 47) étant fixé avec son extrémité (26) opposée à la charnière de manière à ne pouvoir pivoter que verticalement au niveau du support de palier (25) et la charnière (24, 44, 50) étant montée pivotante d'un côté au niveau du support de palier (25) et **en ce que** le support de palier (25) est fixé au niveau du cadre de toit latéral (10).

10. Ensemble cadre de toit selon l'une quelconque des revendications 1 à 9, **caractérisé en ce qu'**un autre ressort à gaz (21), qui soutient une lunette arrière logée de manière pivotante ou rabattable dans le hayon du véhicule automobile, est agencé en plus dans le profilé creux (14, 36, 51) du cadre de toit latéral (10).

11. Ensemble cadre de toit selon la revendication 10, **caractérisé en ce que** l'autre ressort à gaz (21) est articulé à une charnière de lunette arrière (23) séparée par rapport à la charnière de hayon (24).

12. Ensemble cadre de toit selon l'une quelconque des revendications 1 à 5, **caractérisé en ce qu'**un profilé creux (39) du cadre de toit arrière (9), qui est au moins partiellement ouvert vers l'arrière et dans lequel est agencée la charnière de hayon (44), est agencé au niveau du profilé creux (14, 36, 51) du cadre de toit latéral (10) et **en ce que** le ressort à gaz (47) est agencé dans le profilé creux (14, 36, 51) de manière à agir séparément de la charnière (44).

13. Ensemble cadre de toit selon l'une quelconque des revendications 1 à 12, **caractérisé en ce que** le dispositif d'appui comporte à la place du ressort à gaz (22, 47) un cylindre hydraulique (48) entraîné par moteur.

14. Ensemble cadre de toit selon l'une quelconque des revendications 1 à 13, **caractérisé en ce que** le profilé creux (14) présente au niveau de son extrémité arrière (19), une protubérance (20) dirigée vers le cadre de toit arrière (9) avec surface de fixation (17) essentiellement plane à fixer au cadre de toit arrière (9).

15. Ensemble cadre de toit selon l'une quelconque des revendications 1 à 13, **caractérisé en ce que** le profilé creux (36), fermé sur sa périphérie, du cadre de toit latéral (10) présente au niveau de son extrémité arrière (37) une entaille (38), dans laquelle s'engage un profilé creux (39) du cadre de toit arrière (9), les bords (41) de l'entaille (38) étant entourés par le profilé creux (39) et y étant soudés avec ce dernier.
